# EUROPÄISCHE PATENTSCHRIFT

(11) **EP 3 176 047 B1**
(45) Veröffentlichungstag und Bekanntmachung des Hinweises auf die Patenterteilung: **14.11.2018**
(21) Anmeldenummer: 16002556.5
(22) Anmeldetag: 01.12.2016
(51) Int. Cl.: B60W 50/12, G01C 21/28, G05D 1/02, G08G 1/127, G05D 1/00

(54) **BETRIEBSSYSTEM FÜR DEN FAHRBETRIEB EINES FAHRZEUGS, INSBESONDERE EINES NUTZFAHRZEUGS**
OPERATING SYSTEM FOR THE DRIVING OF A VEHICLE, IN PARTICULAR OF A COMMERCIAL VEHICLE
SYSTÈME DE COMMANDE POUR LA CONDUITE D'UN VÉHICULE, EN PARTICULIER D'UN VÉHICULE UTILITAIRE

(30) Priorität: 05.12.2015 DE 102015015833
(43) Veröffentlichungstag der Anmeldung: 07.06.2017
(73) Patentinhaber: MAN Truck & Bus AG, 80995 München (DE)
(72) Erfinder: Schwertberger, Walter, 82278 Althegnenberg (DE); Zimmermann, Andreas, 80995 München (DE); Weise, Sigrun, 85221 Dachau (DE)
(74) Vertreter: Liebl, Thomas

(56) Entgegenhaltungen:
- EP-A1- 0 976 879
- DE-A1-102013 021 594
- KR-A- 20040 009 622
- US-A1- 2009 037 033
- US-A1- 2015 112 537

## Beschreibung

Die Erfindung betrifft ein Betriebssystem für den Fahrbetrieb eines Fahrzeugs, insbesondere eines Nutzfahrzeugs nach dem Oberbegriff des Anspruchs 1.

Die vorliegende Erfindung zu einem Betriebssystem für den Fahrbetrieb eines Fahrzeugs ist prinzipiell und vorteilhaft je nach den Gegebenheiten für unterschiedliche Fahrzeuge verwendbar. Besonders vorteilhaft ist dieses Betriebssystem für den Fahrbetrieb für Nutzfahrzeuge, insbesondere Lastkraftwagen im Fernverkehr einsetzbar, so dass die Erfindung im Folgenden im Wesentlichen in Verbindung mit diesem Einsatz beschrieben wird, was aber keine Beschränkung auf diesen Einsatzfall bedeuten soll.

Das Führen eines Nutzfahrzeugs ist eine verantwortungsvolle und anstrengende Tätigkeit, die eine ständig hohe Konzentration und schnelle Reaktionen erfordert. Ein Fahrer eines Nutzfahrzeugs muss zudem eine gesetzliche vorgegebene, maximale Lenkzeit beachten und vor Überschreitung entweder eine Ruhepause einlegen oder mit einem zweiten Fahrer wechseln. Dies kann zu terminlichen und finanziellen Nachteilen führen, wenn der Fahrer zum Beispiel kurz vor dem Ziel oder dem Wohnort die Lenkzeit überschreiten würde und deshalb eine Pause einlegen müsste oder extra ein zweiter Fahrer mitfahren müsste. Besonders im Fernverkehr sind Fahrer meist lange Zeiten unterwegs und übernachten direkt im Fahrzeug in ständig wechselnder, fremder Umgebung. Ein Fahrer eines Nutzfahrzeugs, insbesondere im Fernverkehr ist somit erheblichen Belastungen ausgesetzt.

Zur Unterstützung eines solchen Fahrers sind bereits eine Vielzahl unterschiedlicher Betriebssysteme, insbesondere als Fahrerassistenzsysteme zur Erhöhung der Fahrsicherheit und/oder des Fahrkomforts allgemein bekannt. Beispielsweise sind dies Bremsassistenzsysteme für eine selbsttätige Bremsung im Gefahrenfall, Spurhalteassistenzsysteme, Warnassistenzsysteme zur Kollisionsvermeidung, etc. Bei den meisten dieser Fahrerassistenzsysteme werden mit einer fahrzeugeigenen Sensorik oder einer Datenempfangseinheit Umweltinformationsdaten erfasst und im Fahrerassistenzsystem für einen direkten Eingriff in den Fahrbetrieb und/oder für eine Empfehlung oder Warnung an den Fahrer ausgewertet. Bekannte Elemente einer solchen Sensorik sind zum Beispiel Kameras, insbesondere Rundumkameras, die die Umgebung erfassen und/oder Kameras eines Spiegelersatzsystems und/oder Rückfahrkameras und/oder radargestützte Abstandsmessvorrichtungen etc. Zudem können über eine Datenempfangseinheit aktuelle Koordinaten des Fahrzeugs und/oder Stauwarnungen etc. erfasst und gegebenenfalls auf einem Display in einer Landkarte angezeigt werden.

Weiter sind Systeme allgemein bekannt, bei denen das Fahrzeug mit einer Datenempfangs- und Datensendeeinheit ausgerüstet ist, mit der das Fahrzeug selbst und/oder ein Fahrer mit einer externen Stelle, die ebenfalls eine Datenempfangs- und Datensendeeinheit aufweist, kommunizieren kann. Eine solche Stelle kann beispielsweise ein Speditionsbüro sein, welches Informationen zu einem freien Parkplatz übermittelt oder ein anderes Fahrzeug, welches automatisch fahrrelevante Daten übersendet.

Weiter sind bereits Fahrzeuge, insbesondere auch Nutzfahrzeuge für eine autonome Fahrzeugführung bekannt, wobei ein Fahrbetrieb ohne Eingriff eines Fahrers vollautomatisiert erfolgt. Dabei werden Umweltinformationsdaten, wie beispielsweise ein Straßenverlauf, Höhenprofile, Straßenbreiten, Positionen und Geschwindigkeiten anderer Fahrzeuge, etc. erfasst und dergestalt ausgewertet, dass Aktuatoren im Fahrzeug für eine kollisionsfreie, zügige und zielgerichtete Fahrt gesteuert werden können. Als Vorteile werden dabei üblicherweise herausgestellt, dass eine solche Einrichtungen zum autonomen Fahren nicht abgelenkt und nicht müde wird sowie in der Konzentration nicht nachlässt und damit einen Sicherheitsgewinn bringt. Zudem soll der Kraftstoffverbrauch durch eine gleichmäßigere und effizientere Fahrt reduzierbar sein. Auf öffentlichen Straßen sind derzeit aber nur an wenigen Stellen die erforderlichen technischen Einrichtung installiert und die rechtlichen Rahmenbedingungen sind ebenfalls noch nicht gegeben, so dass noch ein Fahrer im Fahrzeug für die Überwachung des Fahrbetriebs und erforderlichenfalls für eine Übernahme der Fahrzeugführung erforderlich ist. Der derzeitige Entwicklungsstand für eine autonome Fahrzeugführung ermöglicht somit allenfalls eine teilautonome Fahrzeugführung mit einem ständig für einen Fahreingriff bereitstehenden, das Fahrgeschehen überwachenden Fahrer, so dass ein solcher teilautonomer Fahrbetrieb nur bedingt eine Fahrerentlastung darstellt.

Aufgabe der Erfindung ist es, ein Betriebssystem für den Fahrbetrieb eines Fahrzeugs so weiterzubilden, dass ein Fahrbetrieb effizienter erfolgen kann und/oder ein Fahrer deutlich entlastet werden kann.

Diese Aufgabe wird mit den Merkmalen der unabhängigen Ansprüche gelöst. Vorteilhafte Ausgestaltungen sind Gegenstand der Unteransprüche.

Gemäß Anspruch 1 wird ein Betriebssystem für den Fahrbetrieb eines Fahrzeugs, insbesondere eines Nutzfahrzeugs, vorgeschlagen, das eine fahrzeugseitige Sensorik zur Erfassung von Umweltinformationsdaten sowie eine Datenempfangs- und Datensendeeinheit aufweist zum Empfang von Umweltinformationsdaten und von Daten einer fahrzeugexternen Datenempfangs- und Datensendeeinheit sowie zur Übermittlung von erfassten Umweltinformationsdaten und/oder Fahrzeugdaten und/oder Fahrbetriebsdaten an die fahrzeugexterne Datenempfangs- und Datensendeeinheit. Erfindungsgemäß ist eine fahrzeugexterne Datenempfangs- und Datensendeeinheit Bestandteil einer fahrzeugexternen Steuerzentrale mit einem fahrzeugexternen Fahrerarbeitsplatz als Systemfahrerarbeitsplatz ohne Sichtkontakt zum Fahrzeug für einen externen Fahrer als Systemfahrer. Die Steuerzentrale weist am System-Fahrerarbeitsplatz eine Überwachungseinheit auf, mit der dem Systemfahrer anhand der übermittelten Umweltinformationsdaten und/oder Fahrzeugdaten und/oder Fahrbetriebsdaten in Echtzeit das aktuelle Umfeld und/oder der aktuelle Betriebszustand des Fahrzeugs angezeigt werden.

Die Steuerzentrale weist am Systemfahrerarbeitsplatz eine Fernsteuereinheit und eine Auswahleinheit mit Bedienungselementen für den Systemfahrer auf zur Erzeugung von Steuerdaten für einen ferngesteuerten Fahrbetrieb durch den Systemfahrer.

Weiter ist das Fahrzeug mit einer Fahrbetriebseinrichtung für einen ferngesteuerten Fahrbetrieb ausgerüstet, die durch übermittelte Steuerdaten aus der Steuerzentrale betrieben werden kann.

Zudem ist im Fahrzeug eine Umschaltvorrichtung als Bestandteil des Betriebssystems angeordnet, mit der durch einen, gegebenenfalls fahrzeuginternen, Fahrer und/oder mittels der Auswahleinheit aus der Steuerzentrale durch einen Systemfahrer oder automatisch durch das Betriebssystem auf unterschiedliche Systemzustände umgeschaltet werden kann. Je nach der Ausrüstung des Fahrzeugs sind dies ein Systemzustand manueller Fahrbetrieb durch den fahrzeuginternen Fahrer, ein Systemzustand autonomer oder teilautonomer Fahrbetrieb durch einen sogenannten Highway Pilot und/oder ein Systemzustand ferngesteuerter Fahrbetrieb durch den Systemfahrer.

Durch die erfindungsgemäß geschaffene Möglichkeit, ein Fahrzeug, insbesondere ein Nutzfahrzeug, ohne direkten Sichtkontakt von einem "virtuellen Fahrerarbeitsplatz" in einer Steuerzentrale aus fernzusteuern, können die vorstehenden Nachteile eines ständigen manuellen Fahrbetriebs, insbesondere einer Berufskraftfahrer-Tätigkeit, zum Teil behoben oder zumindest gemildert werden, wie dies im Folgenden noch weiter ausgeführt wird.

Vorteilhaft kann im Systemzustand teilautonomer Fahrbetrieb mit einem Highway Pilot eine ständige Überwachung und/oder eine Übernahme des Fahrbetriebs durch den Systemfahrer erfolgen. Ein fahrzeuginterner Fahrer kann dadurch beispielsweise bei Überschreitung einer maximalen Lenkzeit einen manuellen Fahrbetrieb beenden und eine Ruhepause einlegen. In einem zukünftigen Stadium eines autonomen Fahrbetriebs kann gegebenenfalls ein fahrzeuginterner Fahrer ganz eingespart werden.

Mit der Umschalteinheit kann das Betriebssystem zweckmäßig auch noch andere Systemzustände geschaltet werden, insbesondere auf einen Systemzustand Diagnosemodus und/oder auf einen Systemzustand Failsafemodus.

Wenn ein fahrzeuginterner Fahrer die Priorität bei der Fahrzeugführung hat, ist die Umschaltvorrichtung zweckmäßig so auszulegen ist, dass ein externer Eingriff aus der Steuerzentrale von einem fahrzeuginternen Fahrer unterbunden werden kann. Weiter kann ein externer Eingriff vom fahrzeuginternen Fahrer angefordert werden, beispielsweise die Übernahme für einen ferngesteuerten Fahrbetrieb. Die Aktivierung einer solchen Übernahme muss jeweils bestätigt werden.

Je nach der Ausgestaltung und dem Einsatz des erfindungsgemäßen Betriebssystems kann das Fahrzeug, insbesondere ein Nutzfahrzeug, einen herkömmlichen Fahrerarbeitsplatz, insbesondere mit einem Lenkrad und einer Pedalerie, aufweisen oder bei einer ausgeprägten Ausgestaltung des Betriebssystems für einen ferngesteuerten und/oder autonomen oder teilautonomen Fahrbetrieb nur noch mit einem Behelfsfahrerarbeitsplatz, zum Beispiel mit reduziertem Bedienungskomfort, ausgerüstet sein. Bei einem vollen autonomen Betrieb können auch nur noch ansteuerbare Lenkungs- und Beschleunigungsaktuatoren ohne einen Fahrerarbeitsplatz vorgesehen sein.

Vorteilhaft wird der System-Fahrerarbeitsplatz in der Steuerzentrale einem fahrzeuginternen Fahrerarbeitsplatz, insbesondere mit einem Lenkrad, einer Pedalerie, etc. als Bedienelemente sowie einem Armaturenbrett mit den entsprechenden Anzeigen, nachgebildet. Weiter weist die Überwachungseinheit wenigstens einen Sichtschirm auf, auf dem für den System-fahrer das Blickfeld eines realen fahrzeuginternen Fahrers in Echtzeit wiedergegeben wird. Weiter kann die Streckenführung auf einem Sichtschirm ähnlich einem GPS-Display dem Systemfahrer gezeigt werden. Da der Systemfahrer an seinem System-Fahrerarbeitsplatz die gleichen Bedienelemente unter Berücksichtigung des aktuellen virtuellen Blickfelds zu betätigen hat, kann die Fahrertätigkeit am System-Fahrerarbeitsplatz sofort und ohne einen aufwendigen Lernprozess aufgenommen und durchgeführt werden. Zweckmäßig werden dabei dem Systemfahrer aus den vom realen Fahrzeug übermittelten Umweltinformationsdaten und/oder Fahrzeugdaten und/oder Fahrbetriebsdaten die für einen ferngesteuerten Fahrbetrieb erforderlichen und/oder zweckmäßigen Informationen optisch und/oder akustisch und/oder haptisch zur Verfügung gestellt. Beispielsweise kann eine solche Information ein aktuelles Motorgeräusch, ein Lenkradwiderstand, ein Fahrgeräusch, etc. sein, wodurch dem Systemfahrer an seinem Systemfahrerarbeitsplatz ein bekanntes Fahrgefühl, wie an einem realen Fahrerarbeitsplatz in einem Fahrzeug gegeben wird.

Grundsätzlich kann die Fernbedienung am System-Fahrerarbeitsplatz auch mit anderen Bedienelementen ausgeführt werden, was jedoch einen speziell darauf abgestellten Lernprozess erfordert.

Eine bevorzugte Anwendung des Betriebssystems besteht darin, dass das Fahrzeug einen herkömmlichen Fahrerarbeitsplatz aufweist und sowohl von einem fahrzeuginternen Fahrer manuell als auch von einem Systemfahrer ferngesteuert werden kann. Üblicherweise wird bei dieser Verwendung das Fahrzeug vom fahrzeuginternen Fahrer manuell gefahren. Bei einer drohenden Lenkzeitüberschreitung einer gesetzlich vorgeschriebenen maximalen Lenkzeit kann dann vom fahrerzeuginternen Fahrer und/oder gegebenenfalls von einer externen Überwachungsstelle, insbesondere von der Steuerzentrale eines Übernahme auf einen ferngesteuerten Fahrbetrieb durch den Systemfahrer angefordert werden. Ein fahrzeuginterner Fahrer kann dann eine Ruhepause einlegen, so dass die maximal mögliche und zulässige Lenkzeit durch den ferngesteuerten Fahrbetrieb in der Art eines Lenkzeit-Extenders verlängert werden kann.

Eine weitere vorteilhafte Anwendung des Betriebssystems ergibt sich, wenn das Fahrzeug durchgängig von einem oder gegebenenfalls nacheinander von mehreren Systemfahrern aus der Steuerzentrale ferngesteuert gefahren wird. Gegebenenfalls kann dabei auf einen fahrzeuginternen Fahrer verzichtet werden. Die Steuerzentrale mit dem System-Fahrerarbeitsplatz kann dabei extern, insbesondere am Ort eines Arbeitgebers, und/oder in einer Speditionsleitstelle und/oder an einem Heim-Arbeitsplatz eines System-Fahrers, eingerichtet sein. Damit eröffnen sich gerade bei einer Fahrzeugführung von einem Heim-Arbeitsplatz aus neue vorteilhafte Einsatzmodelle für Fahrer, beispielsweise für Teilzeitfahrer, Urlaubsvertretungen, etc.

In einem weiteren vorteilhaften Anwendungsfall des Betriebssystems wird das Fahrzeug in der Regel im autonomen oder teilautonomen Fahrbetrieb gefahren, wobei in automatisch erkannten und/oder gegebenenfalls von einem fahrzeuginternen Fahrer erkannten Grenzsituationen mit einer entsprechenden Meldung an die Steuerzentrale eine Übergabe an einem System-Fahrer für einen ferngesteuerten Fahrbetrieb erfolgt. Als Grenzsituationen können beispielsweise ein Fahrzeugschaden, Störung der Infrastruktur oder ein Sensorschaden erkannt werden, wobei durch den Übergang in den ferngesteuerten Fahrbetrieb die Sicherheit des Fahrbetriebs weiter gewährleistet ist.

Dabei kann ein Systemfahrer in einer zentralen Steuerzentrale mittels einer Übersichtsdarstellung mehrere Fahrzeuge überwachen, die insbesondere jeweils in einem autonomen oder teilautonomen Fahrbetrieb gefahren werden. Bei einer gemeldeten Grenzsituation in einem Fahrzeug kann dann der Fahrbetrieb des betroffenen Fahrzeugs vom Systemfahrer ferngesteuert übernommen werden. Dabei wird davon ausgegangen, dass solche Grenzsituationen nicht in allen oder einer Mehrzahl der überwachten Fahrzeuge gleichzeitig auftreten.

Für alle vorstehenden Systemzustände und Anwendungen wird ein Abbruch oder eine Störung in der Funkverbindung zwischen Fahrzeug und Steuerzentrale von einer Systemeinheit erkannt, worauf gegebenenfalls das Fahrzeug in einen definierten risikoarmen System-Zustand überführt wird.

Weiter wird ein Verfahren zum Fahrbetrieb eines Fahrzeugs, insbesondere eines Nutzfahrzeugs als Lastkraftwagen, unter Verwendung eines Betriebssystems nach den Ansprüchen 1 bis 11 beansprucht.

Zudem wird ein Fahrzeug, insbesondere ein Nutzfahrzeug als Lastkraftwagen, beansprucht, als Bestandteil eines Betriebssystem für den Fahrbetrieb nach einem der Ansprüche 1 bis 11 und zur Durchführung des Verfahrens nach Anspruch 12.

Anhand einer Zeichnung wird die Erfindung weiter erläutert.

Es zeigen:
- Fig. 1: schematisch einen Lastkraftwagen und eine fahrzeugexterne Steuerzentrale als Bestandteile eines Betriebssystems für den Fahrbetrieb des Lastkraftwagens; und
- Fig. 2: ein Blockschaltbild für die Elemente des Betriebssystems im Lastkraftwagen und in der externen Steuerzentrale.

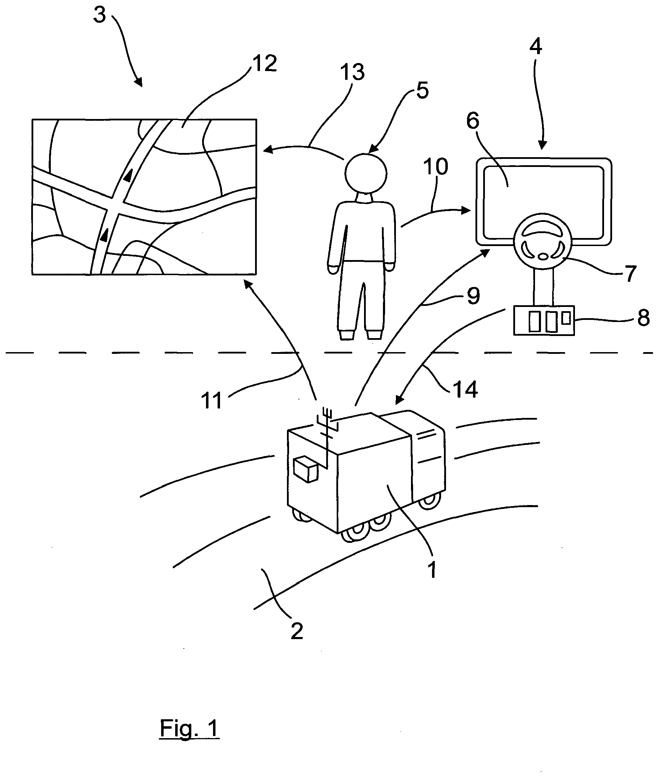

In Fig. 1 ist schematisch ein Lastkraftwagen 1 auf einer Straße 2 sowie eine fahrzeugexterne Steuerzentrale 3 dargestellt, die sich beispielsweise in einer Speditionsleitstelle befindet für die der Lastkraftwagen 1 gerade unterwegs ist. Die Steuerzentrale 3 weist einen Systemfahrer-Arbeitsplatz 4 auf, der bei Bedarf von einem Systemfahrer 5 bedienbar ist.

Der Systemfahrer-Arbeitsplatz 4 besteht aus einem großen Sichtschirm 6 vor einem Lenkrad 7 und einer Pedalerie 8, wobei auch noch ein Armaturenbrett angebracht sein kann. Der Systemfahrer-Arbeitsplatz 4 ist insgesamt einem realen Fahrerarbeitsplatz in einem Lastkraftwagen nachgebildet, wobei auf dem Sichtschirm 6 das aktuelle Sichtfeld eines realen Fahrers im Lastkraftwagen 1 darstellbar ist. Eine entsprechende Information wird vom Lastkraftwagen 1 per Funk dem Systemfahrer-Arbeitsplatz 4 übermittelt (schematisch dargestellt durch Pfeil 9). Vom Systemfahrer 5 können der Bildinhalt des Sichtschirms 6 betrachtet und die Bedienelemente, insbesondere das Lenkrad 7 und die Pedalerie 8 des Systemfahrerarbeitsplatzes 4 betätigt werden (schematisch dargestellt durch Pfeil 10).

Zudem werden vom Lastkraftwagen 1 Standort und Wegdaten an die Steuerzentrale 3 übermittelt (schematisch dargestellt durch Pfeil 11), die beispielsweise auf einem Sichtschirm 12 in einer Landkartendarstellung dem Systemfahrer 5 gezeigt werden (schematisch dargestellt durch Pfeil 13).

Vom Lastkraftwagen 1 können an die Steuerzentrale 3 bzw. an den System-Fahrerarbeitsplatz 4 noch weitere für einen Fahrbetrieb relevante Umweltinformationsdaten, Fahrzeugdaten und Fahrbetriebsdaten für eine Auswertung und/oder Anzeige übermittelt werden (schematisch dargestellt durch Pfeil 9).

Für den Fall, dass vom Lastkraftwagen 1 und/oder seinem realen Fahrer ein ferngesteuerter Fahrbetrieb von der Steuerzentrale angefordert wird (Datenübertragung entsprechend Pfeil 9), nimmt der Systemfahrer 5 seinen Systemfahrer-Arbeitsplatz 4 ein und generiert durch Betätigung der Bedienelemente Steuerungsdaten für den ferngesteuerten Fahrbetrieb des Lastkraftwagens 1, die an diesen übermittelt werden (schematisch dargestellt durch Pfeil 14).

In Fig. 1 ist lediglich die Kommunikation zwischen dem Lastkraftwagen 1 und der Steuerzentrale 3 schematisch dargestellt. Nicht dargestellt ist eine fahrzeugseitige Sensorik zur Erfassung der Umwelt und eine fahrzeugseitige Datenempfangseinheit für übermittelte Umweltinformationen.

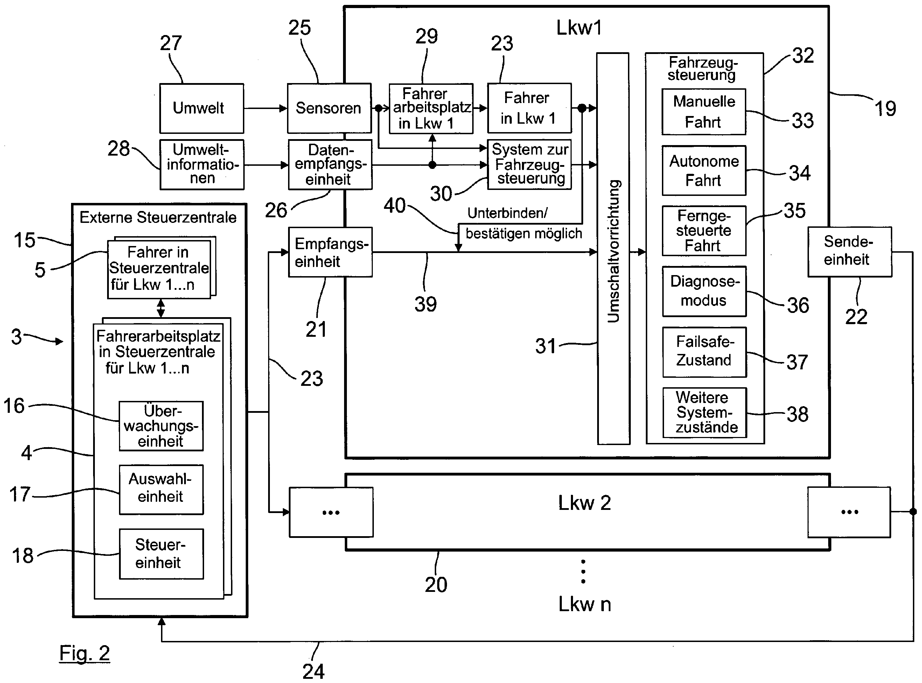

Im Blockschaltbild der Fig. 2 sind in einem Block 15 ein Fahrer als Systemfahrer 5 für einen Lastkraftwagen 1 oder gegebenenfalls für mehrere Lastkraftwagen sowie der Systemfahrer-Arbeitsplatz 4 angegeben als Bestandteile der Steuerzentrale 3. Der Systemfahrer-Arbeitsplatz 4 umfasst eine Überwachungseinheit 16, eine Auswahleinheit 17 und eine Steuereinheit 18.

Im Block 19 sind schematisch die dem erfindungsgemäßen Betriebssystem zugeordneten Komponenten in einem Lastkraftwagen 1 angegeben. Im Block 20 ist angedeutet, dass von der externen Steuerzentrale 3 noch zusätzlich ein oder mehrere Lastkraftwagen überwacht und ferngesteuert werden können.

Im Lastkraftwagen 1 sind eine Empfangseinheit 21 sowie eine Sendeeinheit 22 angeordnet, über die der Lastkraftwagen 1 und/oder ein Fahrer 23 mit der Steuerzentrale ohne Sichtkontakt für einen Datenaustausch verbunden sind (Pfeile 23, 24).

Mittels Sensoren 25 und einer Datenempfangseinheit 26 werden Gegebenheiten der Umwelt 27 erfasst und Umweltinformationen 28 erfasst und empfangen. Die erfassten und empfangenen Daten/Informationen werden insgesamt oder teilweise an einem Fahrer-Arbeitsplatz 29 angezeigt und zudem einem System zur Fahrzeugsteuerung 30 für eine Weiterverarbeitung und Auswertung zur Verfügung gestellt.

Mit einer Umschaltvorrichtung 31 kann eine Fahrzeugsteuerung (Block 32) auf folgende Systemzustände umgeschaltet werden:
- manuelle Fahrt 33 durch den Fahrer 23,
- autonome Fahrt 34 mit einer Einrichtung für eine autonome Fahrt ohne Fahrereingriff als sog. Highway Pilot, der hier beispielsweise dem System zur Fahrzeugsteuerung 30 zugeordnet ist,
- ferngesteuerte Fahrt 35, die durch den Systemfahrer 5 aus der externen Steuerzentrale 3 durchgeführt wird,
- weiter kann auf einen Diagnosemodus 36, einen Failsafezustand 37 und gegebenenfalls auf weitere Systemzustände 38 umgeschaltet werden.

Zudem kann der Fahrer 23 Fahreingriffe (Pfeil 39) aus der Steuerzentrale 3 unterbinden und/oder gegebenenfalls eine Aktivierung nur nach einer Bestätigung ermöglichen (Pfeil 40).

Mit dem im Blockschaltbild dargestellten Betriebssystem ist insbesondere eine ferngesteuerte Fahrt durch den Systemfahrer 5 in der externen Steuerzentrale 3 zur Entlastung des fahrzeuginternen Fahrers 23 möglich.

### Bezugszeichenliste

- 1: Lastkraftwagen
- 2: Straße
- 3: Steuerzentrale
- 4: System-Fahrerarbeitsplatz
- 5: System-Fahrer
- 6: Sichtschirm
- 7: Lenkrad
- 8: Pedalerie
- 9: Pfeil
- 10: Pfeil
- 11: Pfeil
- 12: Sichtschirm
- 13: Pfeil
- 14: Pfeil
- 15: Block
- 16: Überwachungseinheit
- 17: Auswahleinheit
- 18: Steuereinheit
- 19: Block
- 20: Block
- 21: Empfangseinheit
- 22: Sendeeinheit
- 23: Pfeil
- 24: Pfeil
- 25: Sensoren
- 26: Datenempfangseinheit
- 27: Umwelt
- 28: Umweltinformationen
- 29: Fahrerarbeitsplaz
- 30: System zur Fahrzeugsteuerung
- 31: Umschaltvorrichtung
- 32: Block
- 33: Manuelle Fahrt
- 34: Autonome Fahrt
- 35: ferngesteuerte Fahrt
- 36: Diagnosemodus
- 37: Failsafe-Zustand
- 38: Weitere System-Zustände
- 39: Pfeil
- 40: Pfeil

## Patentansprüche

1. Betriebssystem für den Fahrbetrieb eines Fahrzeugs, insbesondere eines Nutzfahrzeugs, das eine fahrzeugseitige Sensorik (25) zur Erfassung von Umweltinformationsdaten sowie eine Datenempfangs- und Datensendeeinheit aufweist zum Empfang von Umweltinformationsdaten (28) und von Daten einer fahrzeugexternen Datenempfangs- und Datensendeeinheit sowie zur Übermittlung von erfassten Umweltinformationsdaten (28) und/oder Fahrzeugdaten und/oder Fahrbetriebsdaten an die fahrzeugexterne Datenempfangs- und Datensendeeinheit,
**dadurch gekennzeichnet,**
**dass** die fahrzeugexterne Datenempfangs- und Datensendeeinheit Bestandteil einer fahrzeugexternen Steuerzentrale (3) ist, mit einem fahrzeugexternen Fahrerarbeitsplatz als System-Fahrerarbeitsplatz (4) ohne Sichtkontakt zum Fahrzeug (1) für einen externen Fahrer als System-Fahrer (5),
**dass** die Steuerzentrale (3) am System-Fahrerarbeitsplatz (4) eine Überwachungseinheit (16) aufweist, mit der dem System-Fahrer (5) anhand der übermittelten Umweltinformationsdaten und/oder Fahrzeugdaten und/oder Fahrbetriebsdaten in Echtzeit das aktuelle Umfeld und/oder der aktuelle Betriebszustand des Fahrzeugs (1) angezeigt werden,
**dass** die Steuerzentrale (3) am System-Fahrerarbeitsplatz (4) eine Fernsteuereinheit (18) und eine Auswahleinheit (17) mit Bedienungselementen (7, 8) für den System-Fahrer (5) aufweist zur Erzeugung von Steuerdaten für einen ferngesteuerten Fahrbetrieb durch den System-Fahrer (5),
**dass** das Fahrzeug (1) mit einer Fahrbetriebseinrichtung für einen ferngesteuerten Fahrbetrieb (35) ausgerüstet ist, die durch übermittelte Steuerdaten aus der Steuerzentrale (3) betreibbar ist, und
**dass** im Fahrzeug (1) eine Umschaltvorrichtung (31) angeordnet ist, mit der durch einen, gegebenenfalls fahrzeuginternen, Fahrer (23) und/oder mittels der Auswahleinheit (17) aus der Steuerzentrale (3) durch einen System-Fahrer (5) oder automatisch durch das Betriebssystem entsprechend der Ausrüstung des Fahrzeugs (1) zwischen den Systemzuständen "manueller Fahrbetrieb" (33) durch den fahrzeuginternen Fahrer (23), "autonomer oder teilautonomer Fahrbetrieb" (34) durch einen so-genannten Highway Pilot und "ferngesteuerten Fahrbetrieb" (35) durch den System-Fahrer (5) umschaltbar ist.

2. Betriebssystem nach Anspruch 1, **dadurch gekennzeichnet, dass** im Systemzustand teilautonomer Fahrbetrieb (34) mit einem Highway Pilot eine Überwachung und/oder eine Übernahme des Fahrbetriebs als ferngesteuerte Fahrt (35) durch den System-Fahrer (5) erfolgt.

3. Betriebssystem nach Anspruch 1 oder 2, **dadurch gekennzeichnet, dass** mit der Umschaltvorrichtung (31) das Betriebssystem auf einen Systemzustand Diagnosemodus (36) und/oder auf einen Systemzustand Failsafemodus (37) und/oder auf weitere Systemzustände (38) umschaltbar ist.

4. Betriebssystem nach einem der vorhergehenden Ansprüche, **dadurch gekennzeichnet, dass** die Umschaltvorrichtung (31) so ausgelegt ist, dass ein externer Eingriff aus der Steuerzentrale (3) von einem fahrzeuginternen Fahrer (3) an einem fahrzeuginternen Fahrerarbeitsplatz (29) unterbunden werden kann und/oder ein externer Eingriff vom fahrzeuginternen Fahrer (23) angefordert werden kann und ein externer Eingriff jeweils vor einer Aktivierung bestätigt werden muss (40).

5. Betriebssystem nach einem der vorhergehenden Ansprüche, **dadurch gekennzeichnet, dass** das Fahrzeug, insbesondere ein Nutzfahrzeug (1), einen herkömmlichen Fahrerarbeitsplatz (29) mit einem Lenkrad und einer Pedalerie aufweist oder bei einer Ausgestaltung für einen ferngesteuerten und/oder autonomen oder teilautonomen Fahrbetrieb nur noch einen Behelfsfahrerarbeitsplatz oder nur noch ansteuerbare Lenkungs- und Beschleunigungsaktuatoren ohne einen Fahrerarbeitsplatz (29) aufweist.

6. Betriebssystem nach einem der vorhergehenden Ansprüche, **dadurch gekennzeichnet,**
**dass** die Überwachungseinheit (16) wenigstens einen Sichtschirm (6, 12) aufweist und der System-Fahrerarbeitsplatz (4) einem fahrzeuginternen Fahrerarbeitsplatz (29), insbesondere mit einem Lenkrad (7) und einer Pedalerie (8) als Bedienelemente, nachgebildet ist, und
**dass** dem Systemfahrer (5) die für einen ferngesteuerten Fahrbetrieb (35) erforderlichen und/oder zweckmäßigen Informationen optisch und/oder akustisch und/oder haptisch übermittelt werden.

7. Betriebssystem nach einem der vorhergehenden Ansprüche, **dadurch gekennzeichnet, dass** das Fahrzeug (1) einen herkömmlichen Fahrerarbeitsplatz (29) aufweist und das Fahrzeug (1) sowohl von einem fahrzeuginternen Fahrer (23) manuell als auch von einem System-Fahrer (5) ferngesteuert fahrbar ist, wobei bevorzugt vorgesehen ist, dass eine entsprechende Übergabe und Umschaltung auf einen ferngesteuerten Fahrbetrieb (35) vom fahrzeuginternen Fahrer (23) und/oder von einer externen Überwachungsstelle, insbesondere von der Steuerzentrale (3) zur Vermeidung einer Lenkzeitüberschreitung als Lenkzeit-Extender, anforderbar ist.

8. Betriebssystem nach einem der Ansprüche 1 bis 6, **dadurch gekennzeichnet,**
**dass** das Fahrzeug (1) durchgängig von einem oder gegebenenfalls nacheinander von mehreren System-Fahrern (5) aus der Steuerzentrale (3), gegebenenfalls ohne fahrzeuginternen Fahrer (23), ferngesteuert gefahren wird, wobei bevorzugt vorgesehen ist, dass die Steuerzentrale (3) extern, bevorzugt am Ort eines Arbeitgebers, und/oder in einer Leitstelle einer Spedition und/oder an einem Heim-Arbeitsplatz eines System-Fahrers (5), eingerichtet ist.

9. Betriebssystem nach einem der Ansprüche 1 bis 6, **dadurch gekennzeichnet, dass** das Fahrzeug (1) in der Regel im autonomen Fahrbetrieb (34) gefahren wird und in automatisch erkannten und/oder von einem fahrzeuginternen Fahrer (23) erkannten Grenzsituationen mit einer entsprechenden Meldung an die Steuerzentrale (3) eine Übergabe an einen System-Fahrer (5) für einen ferngesteuerten Fahrbetrieb (35) erfolgt.

10. Betriebssystem nach Anspruch 9, **dadurch gekennzeichnet, dass** ein System-Fahrer (5) in einer zentralen Steuerzentrale (3) mittels einer Übersichtsdarstellung mehrere Fahrzeuge (1), insbesondere jeweils in einem autonomen oder teilautonomen Fahrbetrieb, überwacht und bei einer gemeldeten Grenzsituation den Fahrbetrieb des betroffenen Fahrzeugs ferngesteuert (35) übernimmt.

11. Betriebssystem nach einem der vorhergehenden Ansprüche, **dadurch gekennzeichnet, dass** ein Abbruch oder eine Störung in der Funkverbindung zwischen Fahrzeug (1) und Steuerzentrale (3) von einer Systemeinheit erkannt wird und das Fahrzeug (1) dann, gegebenenfalls selbsttätig, in einen definierten, risikoarmen System-Zustand überführt wird.

12. Verfahren zum Fahrbetrieb eines Fahrzeugs, insbesondere eines Nutzfahrzeugs, unter Verwendung eines Betriebssystems nach einem der Ansprüche 1 bis 11.

13. Fahrzeug, insbesondere Nutzfahrzeug, mit einem Betriebssystem für den Fahrbetrieb nach einem der Ansprüche 1 bis 11 und/oder zur Durchführung eines Verfahrens nach Anspruch 12.

## Claims

1. Operating system for the driving mode of a vehicle, in particular a commercial vehicle, that has a vehicle-based sensor system (25) for capturing environmental information data and a data reception and data transmission unit for receiving environmental information data (28) and data from a vehicle-external data reception and data transmission unit and for transmitting captured environmental information data (28) and/or vehicle data and/or driving mode data to the vehicle-external data reception and data transmission unit,
**characterized**
**in that** the vehicle-external data reception and data transmission unit is part of a vehicle-external control centre (3), having a vehicle-external driver workstation as a system driver workstation (4) without visual contact with the vehicle (1) for an external driver as a system driver (5),
**in that** the control centre (3) has, at the system driver workstation (4), a monitoring unit (16) used to display the current surroundings and/or the current operating state of the vehicle (1) to the system driver (5) in real time on the basis of the transmitted environmental information data and/or vehicle data and/or driving mode data,
**in that** the control centre (3) has, at the system driver workstation (4), a remote control unit (18) and a selection unit (17) having operator control elements (7, 8) for the system driver (5) for the generation of control data for a remote-controlled driving mode by the system driver (5),
**in that** the vehicle (1) is equipped with a driving mode device for a remote-controlled driving mode (35), which driving mode device is operable by means of transmitted control data from the control centre (3), and
**in that** the vehicle (1) has a changeover apparatus (31) arranged in it that is able to be used by a, possibly vehicle-internal, driver (23) and/or, by means of the selection unit (17) from the control centre (3), by a system driver (5) or automatically by the operating system, according to the equipment of the vehicle (1), to change over between the system states "manual driving mode" (33) by the vehicle-internal driver (23), "autonomous or semiautonomous driving mode" (34) by what is known as a highway pilot and "remote-controlled driving mode" (35) by the system driver (5).

2. Operating system according to Claim 1, **characterized in that** in the semiautonomous driving mode (34) with a highway pilot system state the driving mode is monitored and/or undertaken as a remote-controlled journey (35) by the system driver (5).

3. Operating system according to Claim 1 or 2, **characterized in that** the changeover apparatus (31) is able to be used to change over the operating system to a diagnosis mode (36) system state and/or to a failsafe mode (37) system state and/or to further system states (38).

4. Operating system according to one of the preceding claims, **characterized in that** the changeover apparatus (31) is designed such that external intervention from the control centre (3) can be prevented by a vehicle-internal driver (3) of a vehicle-internal driver workstation (29) and/or external intervention can be requested by the vehicle-internal driver (23) and external intervention needs to be confirmed each time before activation (40).

5. Operating system according to one of the preceding claims, **characterized in that** the vehicle, in particular a commercial vehicle (1), has a conventional driver workstation (29) having a steering wheel and pedals or, in a configuration for a remote-controlled and/or autonomous or semiautonomous driving mode, has only a provisional driver workstation or only actuatable steering and acceleration actuators without a driver workstation (29).

6. Operating system according to one of the preceding claims, **characterized in that** the monitoring unit (16) has at least one screen (6, 12) and the system driver workstation (4) is modelled on a vehicle-internal driver workstation (29), in particular having a steering wheel (7) and pedals (8) as operator control elements, and **in that** the information required and/or expedient for a remote-controlled driving mode (35) is transmitted to the system driver (5) visually and/or audibly and/or haptically.

7. Operating system according to one of the preceding claims, **characterized in that** the vehicle (1) has a conventional driver workstation (29) and the vehicle (1) is driveable both by a vehicle-internal driver (23) manually and by a system driver (5) by remote control, wherein preferably there is provision for applicable transfer and changeover to a remote-controlled driving mode (35) to be requestable by the vehicle-internal driver (23) and/or by an external monitoring point, in particular by the control centre (3), to avoid a driving period being exceeded as a driving period extender.

8. Operating system according to one of Claims 1 to 6, **characterized in that** the vehicle (1) is continuously driven by one or, possibly in succession, by multiple system drivers (5) from the control centre (3), possibly without a vehicle-internal driver (23), by remote control, wherein preferably there is provision for the control centre (3) to be set up externally, preferably at the location of an employer, and/or in a control room of a haulier and/or at a home workstation of a system driver (5).

9. Operating system according to one of Claims 1 to 6, **characterized in that** the vehicle (1) is normally driven in the autonomous driving mode (34) and transfer to a system driver (5) for a remote-controlled driving mode (35) is effected in automatically detected borderline situations and/or borderline situations detected by a vehicle-internal driver (23) with an appropriate report to the control centre (3).

10. Operating system according to Claim 9, **characterized in that** a system driver (5) in a central control centre (3) uses an overview depiction to monitor multiple vehicles (1), in particular in each case in an autonomous or semiautonomous driving mode, and, in the event of a reported borderline situation, undertakes the driving mode of the affected vehicle by remote control (35).

11. Operating system according to one of the preceding claims, **characterized in that** termination or a fault in the radio link between vehicle (1) and control centre (3) is detected by a system unit, and the vehicle (1) is then transferred, possibly automatically, to a defined, low-risk system state.

12. Method for the driving mode of a vehicle, in particular a commercial vehicle, using an operating system according to one of Claims 1 to 11.

13. Vehicle, in particular commercial vehicle, having an operating system for the driving mode according to one of Claims 1 to 11 and/or for performing a method according to Claim 12.

## Revendications

1. Système de conduite destiné à conduire un véhicule, notamment un véhicule utilitaire, comprenant un capteur (25) monté sur le véhicule et servant à détecter des données d'information d'environnement ainsi qu'une unité d'émission de données et de réception de données servant à recevoir des données d'information d'environnement (28) et des données d'une unité d'émission de données et de réception de données extérieure au véhicule et à transmettre des données d'informations d'environnement détectées (28) et/ou des données de véhicule et/ou des données d'entraînement à l'unité d'émission de données et de réception de données extérieure au véhicule,
**caractérisé en ce que**
l'unité d'émission de données et de réception de données extérieure au véhicule fait partie d'un centre de commande (3) extérieur au véhicule, comprenant un poste de conduite extérieur au véhicule en tant que poste de conduite de système (4) sans contact visuel avec le véhicule (1) pour un conducteur extérieur en tant que conducteur de système (5),
le centre de commande (3) comporte au niveau du poste de conduite de système (4) une unité de surveillance (16) au moyen de laquelle l'environnement actuel et/ou l'état de conduite actuel du véhicule (1) est affiché en temps réel au conducteur de système (5) sur la base des données d'information d'environnement transmises et/ou des données du véhicule et/ou des données de conduite,
le centre de commande (3) comporte au niveau du poste de conduite de système (4) une unité de commande à distance (18) et une unité de sélection (17) munie d'éléments de commande (7, 8) destinés au conducteur de système (5) pour que le conducteur de système (5) génère des données de commande de conduite commandée à distance,
le véhicule (1) est équipé d'un dispositif de conduite servant à la conduite commandée à distance (35) qui peut être actionné par des données de commande transmises depuis le centre de commande (3), et
le véhicule (1) comporte un dispositif de commutation (31) permettant à un conducteur (23), se trouvant éventuellement à l'intérieur du véhicule, et/ou à l'unité de sélection (17) du centre de commande (3), par le biais d'un conducteur de système (5) ou automatiquement par le système d'exploitation correspondant à l'équipement du véhicule (1), de commuter entre les états de système « conduite manuelle » (33) par le conducteur (23) se trouvant dans le véhicule, « conduite autonome ou semi-autonome » (34) par ce que l'on appelle un Highway Pilot et « conduite commandée à distance » (35) par le conducteur de système (5).

2. Système de conduite selon la revendication 1, **caractérisé en ce que**, dans l'état de système d'une conduite semi-autonome (34) avec un Highway Pilot, une surveillance et/ou une prise en charge de la conduite en tant que conduite commandée à distance (35) est effectuée par le conducteur de système (5).

3. Système de conduite selon la revendication 1 ou 2, **caractérisé en ce que** le système de conduite peut être commuté avec le dispositif de commutation (31) sur un état du système Mode de diagnostic (36) et/ou sur un état de système Mode Fail Safe (37) et/ou sur d'autres états de système (38).

4. Système de conduite selon l'une des revendications précédentes, **caractérisé en ce que** le dispositif de commutation (31) est conçu de telle sorte qu'une intervention extérieure depuis le centre de commande (3) peut être supprimée par un conducteur (3) se trouvant dans le véhicule au niveau d'un poste de conduite de véhicule (29) se trouvant dans le véhicule et/ou une intervention extérieure peut être demandée par le conducteur (23) se trouvant dans le véhicule et une intervention extérieure doit être confirmée avant chaque activation (40).

5. Système de conduite selon l'une des revendications précédentes, **caractérisé en ce que** le véhicule, en particulier un véhicule utilitaire (1), comporte un poste de conduite (29) classique comportant un volant de direction et un ensemble de pédales ou, dans une configuration de conduite commandée à distance et/ou de conduite autonome ou semi-autonome, seulement un poste de conduite de secours ou seulement des actionneurs de direction et d'accélération commandables sans poste de conduite (29).

6. Système de conduite selon l'une des revendications précédentes, **caractérisé en ce que**
ladite unité de surveillance (16) comporte au moins un écran de visualisation (6, 12) et le poste de conduite de système (4) simule un poste de conduite (29) se trouvant à l'intérieur du véhicule, en particulier un volant de direction (7) et un ensemble de pédales (8) comme éléments de conduite, et
les informations nécessaires et/ou appropriées à une conduite commandée à distance (35) sont transmises optiquement et/ou acoustiquement et/ou haptiquement au conducteur de système (5).

7. Système de conduite selon l'une des revendications précédentes, **caractérisé en ce que** le véhicule (1) comporte un poste de conduite (29) classique et le véhicule (1) peut être conduit aussi bien manuellement par un conducteur (23) se trouvant à l'intérieur du véhicule que de manière commandée à distance par un conducteur de système (5), un transfert et une commutation correspondants sur une conduite commandée à distance (35), qui peut être demandée par le conducteur (23) se trouvant dans le véhicule et/ou par un poste de surveillance extérieur, en particulier le centre de commande (3), étant de préférence prévu pour éviter un dépassement de conduite en tant qu'extension de temps de conduite.

8. Système de conduite selon l'une des revendications 1 à 6, **caractérisé en ce que**
le véhicule (1) est conduit de manière continue à distance par un conducteur de système ou éventuellement successivement par plusieurs conducteurs de système (5) à partir du centre de commande (3), éventuellement sans conducteur (23) à l'intérieur du véhicule, le centre de commande (3) étant de préférence prévu à l'extérieur, de préférence sur le lieu d'un employeur et/ou dans un poste de conduite d'une agence d'expédition et/ou sur un lieu de travail à domicile d'un conducteur de système (5).

9. Système de conduite selon l'une des revendications 1 à 6, **caractérisé en ce que** le véhicule (1) est généralement conduit en conduite autonome (34) et, dans des situations limites détectées automatiquement et/ou par un conducteur (23) se trouvant dans le véhicule, un transfert vers un conducteur de système (5) pour une conduite commandée à distance (35) est effectué par un message correspondant au centre de commande (3).

10. Système de conduite selon la revendication 9, **caractérisé en ce qu'**un conducteur de système (5) se trouvant dans un centre de commande (3) surveille plusieurs véhicules (1), en particulier à chaque fois dans une conduite autonome ou semi-autonome, au moyen d'une vue d'ensemble et, dans une situation limite annoncée par message, prend en charge de manière commandée à distance la conduite du véhicule (35) en question.

11. Système de conduite selon l'une des revendications précédentes, **caractérisé en ce qu'**une interruption ou un défaut dans la liaison radio entre le véhicule (1) et le centre de commande (3) est détectée par une unité de système, puis le véhicule (1) est transféré, si nécessaire automatiquement, à un état de système défini à faible risque.

12. Procédé de conduite d'un véhicule, en particulier d'un véhicule utilitaire, à l'aide d'un système de conduite selon l'une des revendications 1 à 11.

13. Véhicule, en particulier véhicule utilitaire, comprenant un système de conduite destiné à la conduite selon l'une des revendications 1 à 11 et/ou pour la mise en oeuvre d'un procédé selon la revendication 12.
